# EUROPÄISCHE PATENTSCHRIFT

(11) **EP 2 523 899 B1**
(45) Veröffentlichungstag und Bekanntmachung des Hinweises auf die Patenterteilung: **17.02.2016**
(21) Anmeldenummer: 10784260.1
(22) Anmeldetag: 12.11.2010
(51) Int. Cl.: C01B 3/36, F23D 14/22, F23D 14/32, F23D 14/78

(54) **VERFAHREN UND BRENNER ZUR HERSTELLUNG VON SYNTHESEGAS**
METHOD AND BURNER FOR PRODUCING SYNTHESIS GAS
PROCÉDÉ ET BRÛLEUR POUR FABRIQUER UN GAZ DE SYNTHÈSE

(30) Priorität: 16.01.2010 DE 102010004787
(43) Veröffentlichungstag der Anmeldung: 21.11.2012
(73) Patentinhaber: Air Liquide Global E&C Solutions Germany GmbH, 60439 Frankfurt am Main (DE)
(72) Erfinder: MÜLLER-HAGEDORN, Matthias, 76199 Karlsruhe (DE); SCHLICHTING, Holger, 65719 Hofheim (DE); HEINZ, Günther, 65618 Selters (DE)
(74) Vertreter: Keil & Schaafhausen Patent- und Rechtsanwälte
(86) Internationale Anmeldenummer: PCT/EP2010/006906
(87) Internationale Veröffentlichungsnummer: WO 2011/085744

(56) Entgegenhaltungen:
- WO-A1-2008/065182
- DE-A1- 10 156 980
- US-A- 3 705 108
- US-A- 4 491 456
- US-A1- 2003 085 385

## Beschreibung

Die Erfindung bezieht sich auf ein Verfahren und einen Brenner zur Herstellung von Synthesegas durch partielle Oxidation von flüssigem oder gasförmigem, kohlenstoffhaltigem Brennstoff in Gegenwart eines sauerstoffhaltigen Oxidationsmittels, wobei der Brennstoff, das Oxidationsmittel und ein Moderator getrennt einem Brenner zugeführt werden und wobei der Brennstoff und der Moderator in einer Mischkammer des Brenners vermischt werden, bevor sie mit dem Oxidationsmittel in Kontakt gebracht werden.

Als Synthesegase werden allgemein wasserstoffhaltige Gasgemische bezeichnet, welche in verschiedenen Synthesereaktionen Verwendung finden. Beispiele sind die Methanolsynthese, die Herstellung von Ammoniak nach dem Haber-Bosch-Verfahren oder die Fischer-Tropsch-Synthese. Synthesegase können aus festen, flüssigen oder gasförmigen Ausgangsstoffen hergestellt werden.

Verfahren und Vorrichtungen zur Herstellung von Synthesegas sind prinzipiell im Stand der Technik bekannt. So existieren eine Reihe von unterschiedlichen technischen Ansätzen, bei denen flüssige oder gasförmige, kohlenstoffhaltige Brennstoffe mit einem Moderator bestehend aus Wasserdampf, Kohlendioxid bzw. einer Mischung davon mit einem sauerstoffhaltigen Gas partiell oxidiert werden. Die Austrittsöffnung des verwendeten Brenners ist dabei in eine Brennkammer gerichtet.

Die US 4,491,456 beschreibt einen Brenner mit einem zentralen Zufuhrkanal sowie konzentrisch darum angeordnete Zufuhrleitungen für flüssige oder gasförmige Stoffströme.

Die US 3,705,108 beschreibt ein Verfahren zur Herstellung von Synthesegas durch Reaktion eines flüssigen Kohlenwasserstoffs mit einem O₂-haltigen Gas unter Verwendung eines Temperatur-regulierenden Gases bei Temperaturen von 980°C - 1900°C.

Die WO 2008/065182 A1 offenbart ein Verfahren zur Herstellung von Synthesegas, bei dem ein Brenner mit mehreren Düsenöffnungen versehen ist, so dass ein Kohlenwasserstoffbrennstoff getrennt von einem Oxidiergas durch den Brenner geführt wird. Der Kohlenwasserstoffbrennstoff und das Oxidiergas werden durch eine Durchführung für ein Moderatorgas voneinander getrennt. Die Austrittsgeschwindigkeit des Moderatorgases ist dabei größer als die Austrittsgeschwindigkeit des Oxidiergases.

Die US 2003/0085385 A1 beschreibt ein Verfahren, bei dem die Reaktionspartner Kohlenwasserstoffbrennstoff, Dampf, Sauerstoff und rezykliertes Wasser in getrennten Kanälen zur Düse eines Vierstrominjektors geführt werden. Durch die Anordnung soll eine bessere Umsetzung des Kohlenwasserstoffbrennstoffs erreicht werden.

Bei dem aus der WO 95/32148 A bekannten Verfahren zur Herstellung von Synthesegas soll eine Düsenkorrosion dadurch vermieden werden, dass Kohlenwasserstoffbrennstoff und Oxidationsmittel durch einen Moderator getrennt parallel von der Düse weglaufen und keine Vermischung von Moderator und Brennstoff stattfindet.

Bei diesen bekannten Brennern sind mindestens drei Austrittsöffnungen am Brennermund vorhanden und die Zerstäubung des Brennstoffs erfolgt außerhalb des Brenners. Bei einer externen Zerstäubung des Brennstoffs sind am Brennermund hohe relative Geschwindigkeitsunterschiede der benachbart austretenden Reaktionspartner notwendig, um die nötige Zerstäubungsarbeit aufzubringen. Diese hohen Austrittsgeschwindigkeiten des Moderators und/oder des Oxidationsmittels erzeugen ausgedehnte Reaktionszonen. Zudem findet ein hoher Energieeintrag über die Förderorgane (z. B. Pumpen) statt. Daher müssen die Düsenaustrittsöffnungen insbesondere bei transienten Bedingungen, wie Anfahr- und Abfahrvorgängen, gekühlt werden. Ein großes Problem stellen im Stand der Technik zudem vorzeitiger Materialverschleiß, bzw. Materialabtrag am Brennermund dar.

Bei dem in der DE 101 56 980 B4 beschriebenen Verfahren zur Herstellung von Synthesegas durch partielle Oxidation von flüssigen oder gasförmigen Brennstoffen in Gegenwart von Sauerstoff werden der Brennstoff, das sauerstoffhaltige Gas und ein Zerstäubungsmedium getrennt dem Brenner zugeführt und das Zerstäubungsmedium wird unmittelbar vor der zentralen Mündungsöffnung für den Brennstoff über eine oder mehrere Düsen entspannt. Das sauerstoffhaltige Gas wird außen an der Zerstäuberdüse vorbeigeführt und tritt konzentrisch um die Mischung aus Brennstoff und Zerstäubungsmedium in den Reaktorraum ein. Daher kommt es zu exothermen Reaktionen in der Nähe des Brennkopfes, was bei transienten Bedingungen zu einer starken thermischen Belastung der Reaktorwandung im Bereich des Brenners führt.

Vor diesem Hintergrund liegt der Erfindung die Aufgabe zugrunde, einen alternativen Brenner vorzuschlagen, der insbesondere beim Betrieb mit transienten Bedingungen geringeren Belastungen ausgesetzt ist.

Diese Aufgabe wird durch die Erfindung bei einem Verfahren der eingangs genannten Art gemäß Anspruch 1 im Wesentlichen dadurch gelöst, dass das Oxidationsmittel zentral durch eine Austrittsöffnung des Brenners in eine Brennkammer eingeführt wird und dass das Gemisch aus Brennstoff und Moderator durch die Austrittsöffnung konzentrisch um das Oxidationsmittel in die Brennkammer eingeführt wird.

Es hat sich überraschenderweise gezeigt, dass durch die im Vergleich zum Stand der Technik umgekehrte Medienführung die Temperaturverteilung im Reaktionsraum günstig beeinflusst werden kann und damit die thermische Belastung der Reaktorwandung und der Brennerbauteile verringert wird.Durch die erfindungsgemäße Medienführung wird das Oxidationsmittel (Sauerstoff, Luft) von dem in der Brennkammer befindlichen Synthesegas abgeschirmt.

Dadurch können exotherme Reaktionen in der Nähe des Brennermundes unterdrückt werden.

Um eine ausreichende Zerstäubung und Durchmischung mit dem Brennstoff zu erreichen, wird in Weiterbildung der Erfindung vorgeschlagen, den Moderator mit einer Geschwindigkeit von 30 m/s bis 200 m/s, vorzugsweise 80 m/s bis 140 m/s, in die Mischkammer einzustrahlen. Als Moderator wird vorteilhafterweise Dampf, Kohlendioxid oder eine Mischung daraus, gegebenenfalls unter Zusatz eines brennbaren Gases, verwendet.

Die Durchmischung mit dem Moderator wird erfindungsgemäß dadurch gefördert, dass der Brennstoff in einem Winkel β von 10° bis 80°, vorzugsweise 40° bis 60°, zur Brennerachse auf den Moderatorstrahl geführt wird. Um eine wirkungsvolle Zerstäubung zu erreichen, beträgt in Ausgestaltung der Erfindung die Austrittsgeschwindigkeit der Mischung aus Brennstoff und Moderator aus der Mischkammer 30 m/s bis 100 m/s.

In Weiterbildung der Erfindung ist vorgesehen, dass der Brennstoff der Brennkammer durch mehrere Brenner zugeführt wird, die in ein gemeinsames Gehäuse integriert sein können. Hierbei besteht die erfindungsgemäße Möglichkeit, jedem Brenner einen anderen Brennstoff zuzuführen, und dadurch die Reaktionsbedingungen in der Brennkammer gezielt zu beeinflussen.

Die vorliegende Erfindung bezieht sich auch auf einen Brenner zur Herstellung von Synthesegas gemäß Anspruch 8, der zur Durchführung des erfindungsgemäßen Verfahrens geeignet ist. Ein solcher Brenner weist einen zentralen Zufuhrkanal für die Zufuhr des Oxidationsmittels, eine den zentralen Zufuhrkanal umgebende Mischkammer, in die Zufuhrleitungen für den Brennstoff und einen Moderator münden, und einen Austrittskanal auf, über welchen die Mischung aus Brennstoff und Moderator aus der Mischkammer einer Austrittsöffnung des Brenners zugeführt wird. Erfindungsgemäß ist der Austrittskanal konzentrisch um den zentralen Zufuhrkanal für das Oxidationsmittel angeordnet.

Um den Moderator zu beschleunigen, mündet die Zufuhrleitung für den Moderator vorzugsweise über einen verengten Ringspalt in die Mischkammer.

In einer Weiterbildung des erfindungsgemäßen Brenners trifft die Zufuhrleitung für den Brennstoff in einen Winkel β von 10° bis 80°, vorzugsweise 40° bis 60°, zur Brennerachse auf den koaxial zu dem zentralen Zufuhrkanal für das Oxidationsmittel geführten Moderatorstrahl. In der Mischkammer wird der flüssige Brennstoff hierdurch intensiv mit dem Moderator vermischt, wobei er zu feinen/kleinen Tropfen zerteilt wird.

Der Austrittskanal verjüngt sich zur Austrittsöffnung hin. Dadurch wird der zerstäubte Brennstoff zum zentralen Oxidationsmittelstrahl hin abgelenkt und zudem kurz vor dem Austritt in den Brennraum noch einmal beschleunigt. Durch die Verjüngung der Austrittsöffnung erfolgt zwangsläufig eine Benetzung der äußeren Brennstoffkanalwand, so dass diese intensiv durch den Brennstoff gekühlt wird.

Hierbei sind ein Winkel γ der äußeren Brennstoffkanalwand zur Brennerachse und ein Winkel δ der inneren Brennstoffkanalwand zu einer Parallelen zur Brennerachse so gewählt, dass der Winkel γ größer ist als der Winkel δ. Beide Winkel liegen vorzugsweise im Bereich von 0 bis 20 ° und insbesondere zwischen 0 und 10°.

Gemäß einer bevorzugten Ausgestaltung der Erfindung ist der zentrale Zufuhrkanal für das Oxidationsmittel im Bereich der Austrittsöffnung mit einem Winkel α von 0° bis 45°, vorzugsweise 0° bis 10°, zur Brennerachse aufgeweitet, um eine verbreiterte Einstrahlung in den Brennraum zu erreichen.

Erfindungsgemäß wird der Brenner von einem Kühlwassermantel umgeben. Sind mehrere Brenner vorgesehen, können diese auch gemeinsam ummantelt werden.

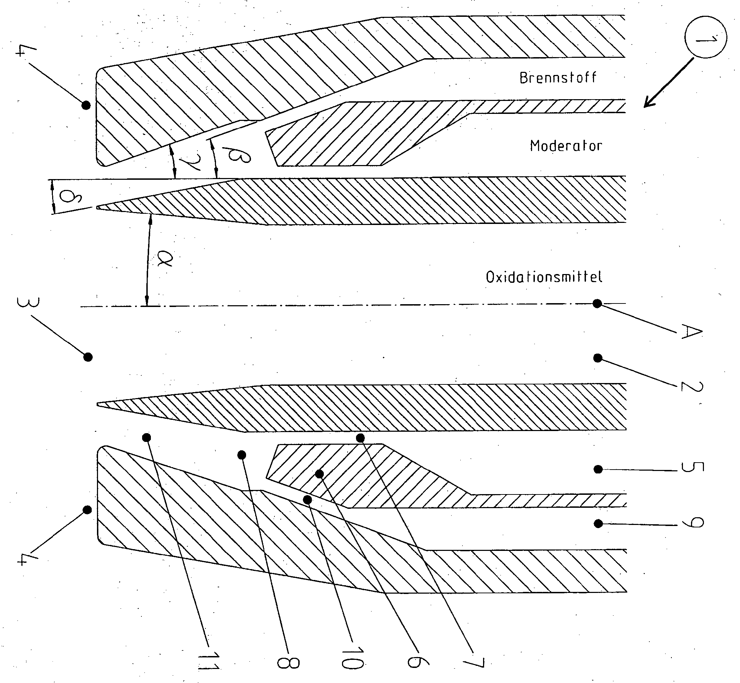

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbezügen.

Die einzige Figur zeigt in einer schematischen Schnittdarstellung einen Teil eines erfindungsmäßen Brenners.

Der in der Zeichnung ausschnittweise gezeigte Brenner 1 weist einen zentralen Zufuhrkanal (Rohr) 2 auf, durch welchen das Oxidationsmittel, vorzugsweise technisch reiner, komprimierter und vorgewärmter Sauerstoff, zur Austrittsöffnung 3 in der Brennerbodenplatte 4 gelangt. Im vorderen Bereich seiner Mündung in die nicht dargestellte Brennkammer des Reaktors zur Herstellung von Synthesegas ist der zentrale Zufuhrkanal 2 mit einem Winkel a von 0° bis 45°, vorzugsweise 0° bis 10° zur Brennerachse A geringfügig aufgeweitet. Damit wird der größte Innendurchmesser des zentralen Zufuhrkanals 2 an der Mündung in die Brennkammer erreicht. Die Austrittsfläche, die der zentrale Zufuhrkanal 2 für das Oxidationsmittel bietet, wird je nach Anwendungsfall so berechnet, dass eine Austrittsgeschwindigkeit des Oxidationsmittels von 40 m/s bis 140 m/s, vorzugsweise 60 m/s bis 100 m/s, realisiert wird.

Koaxial zur zentralen Oxidationsmittelzuführung durch den Zufuhrkanal 2 wird Moderator über eine Zufuhrleitung 5 zu einer Zweistoff-Zerstäuberdüse 6 geführt. Der Moderator besteht aus Dampf, Kohlendioxid oder einer Mischung daraus. Bei Bedarf und Verfügbarkeit kann dem Moderator auch noch ein brennbares Gas zugefügt werden. In der Zerstäuberdüse 6 wird der Moderator durch einen Ringspalt 7 so beschleunigt, dass er Geschwindigkeiten von 30 m/s bis 200 m/s, vorzugsweise 80 m/s bis 140 m/s, erreicht. Diese Werte sind für reinen Dampf als Moderator berechnet. Bei Verwendung von Kohlendioxid, einer Mischung aus Dampf und Kohlendioxid bzw. bei der Zumischung eines brennbaren Gases berechnet sich die zu erzielende Geschwindigkeit und damit das Spaltmaß des Ringspaltes 7 entsprechend dem Impulsfluss von reinem Dampf bei dem angegebenen, zu erzielenden Geschwindigkeitsbereich.

Der im Ringspalt 7 beschleunigte Moderator tritt stromabwärts in eine den zentralen Zufuhrkanal 2 umgebende Mischkammer 8, wo er auf einen seitlich zugeführten Brennstoffstrahl trifft. Als Brennstoff werden flüssige oder gasförmige kohlenstoffhaltige Medien verwendet, bspw. Heizöl oder Erdgas. Der Begriff Flüssigkeit im Sinne der vorliegenden Erfindung erfasst hierbei auch Suspensionen (Slurries), bei denen Feststoffe in der Flüssigkeit aufgeschlämmt sind.

Der Brennstoffstrahl wird im oberen Teil des Brenners 1 durch eine Zufuhrleitung 9 zunächst koaxial zum Moderator geführt, bevor er innerhalb der Zerstäuberdüse 6 durch eine Bohrung oder konischen Zufuhrkanal 10 in einem Winkel β von 10° bis 80°, vorzugsweise 40° bis 60°, zur Brennerachse A in die Mischkammer 8 eintritt. Erfindungsgemäß werden hierdurch Austrittsgeschwindigkeiten von 10 m/s bis 50 m/s, vorzugsweise von 10 m/s bis 30 m/s, in die Mischkammer 8 erreicht.

Die Mischkammer 8 dient dazu, eine intensive Vermischung zwischen dem flüssigen Brennstoff und dem Moderator herzustellen und dabei den Brennstoff zu Tropfen zu zerteilen. Die Mischkammer 8 führt über einen Austrittskanal 11 zur Austrittsöffnung 3 des Brenners 1, wobei sich der Austrittskanal 11 vorzugsweise zur Austrittsöffnung 3 hin verjüngt. Diese Verjüngung erfolgt durch die Wahl der beiden Winkel γ und δ, wobei der Winkel γ größer oder gleich dem Winkel δ ist. γ stellt dabei den Winkel der äußeren Brennstoffkanalwand zur Brennerachse dar und liegt im Bereich von 0 bis 20 °; vorzugsweise von 0 bis 10 °. Der Winkel δ zwischen der inneren Brennstoffkanalwand und einer Parallelen zur Brennerachse liegt ebenfalls in Bereich von 0 bis 20 °, vorzugsweise von 0 bis 10 °. Die axiale Länge der Mischkammer 8 und des Austrittskanals 11 bis zur Austrittsöffnung 3 beträgt zusammen 10 mm bis 300 mm, vorzugsweise 20 mm bis 200 mm. Durch die Verjüngung des Austrittskanals 11 wird der zerstäubte Brennstoff zum zentralen Oxidationsmittelstrahl hin abgelenkt und zudem kurz vor dem Austritt in die Brennkammer noch einmal beschleunigt. Durch die Verjüngung des Austrittskanals 11 wird zwangsläufig die äußere Brennstoffkanalwand benetzt, so dass diese intensiv durch den Brennstoff gekühlt werden kann. Die Austrittsgeschwindigkeit des Moderator-Brennstoff-Gemischs beträgt 30 m/s bis 100 m/s und liegt damit in ähnlicher Größenordnung wie die Austrittsgeschwindigkeit des Oxidationsmittelstrahls. Üblicherweise ist der Brenner 1 von einem Kühlwassermantel umgeben, der jedoch zur Vereinfachung in der Figur nicht dargestellt ist.

Das sich durch die erfindungsgemäße Anordnung und Verfahrensführung an der Brennerbodenplatte 4 und in deren unmittelbarer Umgebung ausbildende Geschwindigkeitsprofil der Reaktionsmedien hat den Vorteil, dass die Rezirkulation von heißem Spaltgas aus der Brennkammer im äußeren Bereich des Brenners nur auf den zerstäubten Brennstoff trifft. Damit sind nur endotherme bzw. weitgehend thermisch neutrale Reaktionen möglich, die eine direkte Wärmefreisetzung in unmittelbarer Umgebung der Brennerbodenplatte 4 verhindern. Zudem bildet sich im äußeren Bereich der Austrittsöffnung 3 eine Verkokungsschicht, die eine zusätzliche thermische Isolation für die eingetragene Wärmestrahlung darstellt.

Um das Geschwindigkeitsprofil an der Austrittsöffnung 11 des Brenners 1 zu variieren, bzw. um den Lastbereich des Brenners 1 zu erweitern, kann eine gewisse Menge Moderator dem Oxidationsmittel schon außerhalb des Brenners 1 zugemischt werden.

Der Brenner 1 der vorliegenden Erfindung ist für Vergasungsdrücke in der Brennkammer von 10 bar bis 120 bar bei Temperaturen in der Brennkammer von durchschnittlich 1000 °C bis 1600 °C ausgelegt.

Der Brenner 1 der vorliegenden Erfindung kann alleine oder als eine Anordnung von mehreren Brennern 1 in einem gemeinsamen Gehäuse untergebracht sein, wobei durch den oder die Brenner 1 der Brennstoff in die Brennkammer geleitet wird. Als Alternative dazu können mehrere einzelne Brenner 1 nach der vorliegenden Erfindung in der Brennkammer installiert sein, wobei der Brennstoff, der Moderator und das Oxidationsmittel dann in geeigneter Weise auf die einzelnen Brenner 1 verteilt werden.

Als alternative Ausführungsform kann das erfindungsgemäße Verfahren auch mit einem gasförmigen oder überkritischen, kohlenstoffhaltigen Brennstoff (z.B. Methan) betrieben werden. Bei dem erfindungsgemäßen Brenner kann dann die Zweistoff-Zerstäuberdüse 6 entfallen, da eine Zerstäubung des Brennstoffs nicht mehr notwendig ist. Für diesen Fall kann der Brenner einfacher aufgebaut werden, da der Moderator und der Brennstoff schon im gemischten Zustand in den Brenner eingeführt werden können. Die Austrittsgeschwindigkeit für das Oxidationsmittel und das Reduktionsmittel zum Brennraum sowie die Winkel γ und δ bleiben in dieser alternativen Ausführungsform unberührt.

Durch die Erfindung ist es möglich, flüssige Brennstoffe, insbesondere Schweröle und schwere viskose Rückstände aus Raffinerien, durch partielle Oxidation zu Synthesegas zu verarbeiten. Dabei wird zunächst der Brennstoff zu Tröpfchen zerteilt und intensiv mit dem Moderator gemischt, bevor dieses Gemisch mit dem sauerstoffhaltigen Oxidationsmittel in Kontakt kommt. Durch diese Medienführung wird gewährleistet, dass die der Brennkammer zugewandten Brennerbauteile durch die erwähnten Medien gut gekühlt werden, Diese Kühlung findet insbesondere auch bei Betriebszuständen statt, bei denen ein Kühlmedium nicht verfügbar ist.

### Beispiele

Ein erfindungsgemäßer Brenner 1 wurde für einen Nenndurchsatz von bis zu 500 kg/h flüssigem Einsatzstoff ausgelegt und mit dem erfindungsgemäßen Verfahren in einer Versuchsanlage erprobt.

### Beispiel 1:

Als flüssiger Brennstoff wurde Heizöl EL (extraleichtes Heizöl) mit einer Einsatztemperatur von 20°C und einer kinematischen Viskosität (bei Einsatzbedingungen) von ca. 6 mm²/s verwendet. Das Oxidationsmittel war technisch reiner Sauerstoff mit einer Temperatur von 250°C. Als Moderator wurde Dampf mit einer Temperatur von 310°C eingesetzt. In der Brennkammer herrschte ein Druck von 61 bar. Als Spaltgastemperatur am Brennkammeraustritt wurden 1410°C ermittelt. Die Geschwindigkeiten der Reaktionsmedien wurden wie folgt bestimmt: Austrittsgeschwindigkeit des Oxidationsmittels 90 m/s, Geschwindigkeit des Moderators Dampf in der Zweistoff-Zerstäuberdüse 9 120 m/s, Geschwindigkeit des Brennstoffs Heizöl EL in der Zweistoff-Zerstäuberdüse 9 20 m/s.

Die in diesem Beispiel erzielte Zusammensetzung des Spaltgases ergab 3,9 % CO₂, 47,7 % CO und 48,9 % H₂ (in Molprozent, trocken).

### Beispiel 2:

Als flüssiger Brennstoff wurde Intermediate Fuel Oil IFO 380 SA (i.d.R. eine Mischung aus Schweröl und Dieselöl) mit einer Einsatztemperatur von 90°C und einer kinematischen Viskosität (bei Einsatzbedingungen) von ca. 120 mm²/s verwendet. Das Oxidationsmittel war technisch reiner Sauerstoff mit einer Temperatur von 245°C. Als Moderator wurde Dampf mit einer Temperatur von 290°C eingesetzt. In der Brennkammer herrschte ein Druck von 51 bar. Als Spaltgastemperatur am Brennkammeraustritt wurden 1410°C ermittelt. Die Geschwindigkeiten der Reaktionsmedien wurden wie folgt bestimmt: Austrittsgeschwindigkeit des Oxidationsmittels 80 m/s, Geschwindigkeit des Moderators Dampf in der Zweistoff-Zerstäuberdüse 9 90 m/s, Geschwindigkeit des Brennstoffs Intermediate Fuel Oil in der Zweistoff-Zerstäuberdüse 9 14 m/s.

Die in diesem Beispiel erzielte Zusammensetzung des Spaltgases ergab 3,5 % CO₂, 50,3 % CO und 45,8 % H₂ (in Molprozent, trocken).

### Bezugszeichenliste

- 1: Brenner
- 2: zentraler Zufuhrkanal
- 3: Austrittsöffnung
- 4: Brennerbodenplatte
- 5: Zufuhrleitung für Moderator
- 6: Zweistoff-Zerstäuberdüse
- 7: Ringspalt
- 8: Mischkammer
- 9: Zufuhrleitung für Brennstoff
- 10: Bohrung / konischer Kanal
- 11: Austrittskanal

- A: Brennerachse
- α: Winkel zwischen Austrittsöffnungsaufweitung und Brennerachse
- β: Winkel zwischen Brennstoffstrahl und Brennerachse
- γ: Winkel zwischen äußerer Austrittskanalwand und Brennerachse
- δ: Winkel zwischen innerer Austrittskanalwand und einer Parallelen zur Brennerachse

## Patentansprüche

1. Verfahren zur Herstellung von Synthesegas durch partielle Oxidation von flüssigem oder gasförmigem, kohlenstoffhaltigem Brennstoff in Gegenwart eines sauerstoffhaltigen Oxidationsmittels, wobei der Brennstoff, das Oxidationsmittel und ein Moderator getrennt einem Brenner zugeführt werden und wobei der Brennstoff und der Moderator in einer Mischkammer des Brenners vermischt werden, bevor sie mit dem Oxidationsmittel in Kontakt gebracht werden, **dadurch gekennzeichnet, dass** das Oxidationsmittel zentral durch eine Austrittsöffnung des Brenners in eine Brennkammer eingeführt wird, dass das Gemisch aus Brennstoff und Moderator durch die Austrittsöffnung konzentrisch um das Oxidationsmittel in die Brennkammer eingeführt wird, dass im Austrittskanal zur Austrittsöffnung hin ein Winkel γ der äußeren Brennstoffkanalwand zur Brennerachse und ein Winkel δ der inneren Brennstoffkanalwand zu einer Parallelen zur Brennerachse so gewählt werden, dass der Winkel γ größer ist als der Winkel δ.

2. Verfahren nach Anspruch 1, **dadurch gekennzeichnet, dass** der Moderator mit einer Geschwindigkeit von 30 m/s bis 200 m/s, vorzugsweise 80 m/s bis 140 m/s in die Mischkammer eingestrahlt wird.

3. Verfahren nach Anspruch 1 oder 2, **dadurch gekennzeichnet, dass** als Moderator Dampf, Kohlendioxid oder eine Mischung daraus, ggf. unter Zusatz eines brennbaren Gases, verwendet wird.

4. Verfahren nach einem der vorhergehenden Ansprüche, **dadurch gekennzeichnet, dass** der Brennstoff in einem Winkel (β) von 10° bis 80°, vorzugsweise 40° bis 60° zur Brennerachse auf den Moderatorstrahl geführt wird.

5. Verfahren nach einem der vorhergehenden Ansprüche, **dadurch gekennzeichnet, dass** die Austrittsgeschwindigkeit der Mischung aus Brennstoff und Moderator aus der Mischkammer 30 m/s bis 100 m/s beträgt.

6. Verfahren nach einem der vorhergehenden Ansprüche, **dadurch gekennzeichnet, dass** der Brennstoff der Brennkammer durch mehrere Brenner zugeführt wird.

7. Verfahren nach Anspruch 6, **dadurch gekennzeichnet, dass** jedem Brenner ein anderer Brennstoff zugeführt wird.

8. Brenner (1) zur Herstellung von Synthesegas durch partielle Oxidation von flüssigem oder gasförmigem, kohlenstoffhaltigem Brennstoff in Gegenwart eines sauerstoffhaltigen Oxidationsmittels, insbesondere gemäß einem Verfahren nach einem der vorhergehenden Ansprüche, mit einem zentralen Zufuhrkanal (2) für die Zufuhr des Oxidationsmittels, einer den zentralen Zufuhrkanal (2) umgebenden Mischkammer (8), In die Zufuhrleitungen (9, 5) für den Brennstoff und einen Moderator münden, und einem Austrittskanal (11), über welchen die Mischung aus Brennstoff und Moderator aus der Mischkammer (8) einer Austrittsöffnung (3) des Brenners (1) zugeführt wird, wobei der Austrittskanal (11) konzentrisch um den zentralen Zufuhrkanal (2) für das Oxidationsmittel angeordnet ist und wobei im Austrittskanal (11) zur Austrittsöffnung (3) hin ein Winkel γ der äußeren Brennstoffkanalwand zur Brennerachse und ein Winkel δ der inneren Brennstoffkanalwand zu einer Parallelen zur Brennerachse so gewählt sind, dass der Winkel γ größer ist als der Winkel δ.

9. Brenner nach Anspruch 8, **dadurch gekennzeichnet, dass** die Zufuhrleitung (5) für den Moderator über einen verengten Ringspalt (7) in die Mischkammer (8) mündet.

10. Brenner nach Anspruch 8 oder 9, **dadurch gekennzeichnet, dass** die Zufuhrleitung (9) für den Brennstoff in einem Winkel (β) von 10° bis 80°, vorzugsweise 40° bis 60°, zur Brennerachse (A) auf den koaxial zu dem zentralen Zufuhrkanal (2) für das Oxidationsmittel geführten Moderatorstrahl trifft.

11. Brenner nach einem der Ansprüche 8 bis 10, **dadurch gekennzeichnet, dass** sich der Austrittskanal (11) vorzugsweise mit einem Winkel von 0° bis 20° zur Brennerachse (A) zur Austrittsöffnung (3) hin verjüngt.

12. Brenner nach einem der Ansprüche 8 bis 11, **dadurch gekennzeichnet, dass** der zentrale Zufuhrkanal (2) für das Oxidationsmittel im Bereich der Austrittsöffnung (3) mit einem Winkel (α) von 0° bis 45°, vorzugsweise 0° bis 10°, zur Brennerachse (A) aufgeweitet ist.

13. Brenner nach einem der Ansprüche 8 bis 12, **dadurch gekennzeichnet, dass** der Brenner (1) von einem Kühlwassermantel umgeben ist.

## Claims

1. A process for producing synthesis gas by partial oxidation of liquid or gaseous, carbonaceous fuel in the presence of an oxygen-containing oxidant, wherein the fuel, the oxidant and a moderator are separately supplied to a burner and wherein the fuel and the moderator are mixed in a mixing chamber of the burner, before they are brought in contact with the oxidant, **characterized in that** the oxidant is centrally introduced into a combustion chamber through an outlet opening of the burner, that the mixture of fuel and moderator is introduced through the outlet opening into the combustion chamber concentrically around the oxidant, that in the outlet duct in the direction of the outlet opening an angle γ of the outer fuel duct wall to the burner axis and an angle δ of the inner fuel duct wall to a parallel to the burner axis are chosen such that the angle γ is greater than the angle δ.

2. The process according to claim 1, **characterized in that** the moderator is injected into the mixing chamber with a velocity of 30 m/s to 200 m/s, preferably 80 m/s to 140 m/s.

3. The process according to claim 1 or 2, **characterized in that** steam, carbon dioxide or a mixture thereof, possibly by adding a combustible gas, is used as moderator.

4. The process according to any of the preceding claims, **characterized in that** the fuel is guided towards the moderator jet an angle (β) of 10° to 80°, preferably 40° to 60°, with respect to the burner axis.

5. The process according to any of the preceding claims, **characterized in that** the exit velocity of the mixture of fuel and moderator from the mixing chamber is 30 m/s to 100 m/s.

6. The process according to any of the preceding claims, **characterized in that** the fuel is supplied to the combustion chamber through a plurality of burners.

7. The process according to claim 6, **characterized in that** a different fuel is supplied to each burner.

8. A burner (1) for producing synthesis gas by partial oxidation of liquid or gaseous, carbonaceous fuel in the presence of an oxygen-containing oxidant, in particular by a process according to any of the preceding claims, comprising a central supply channel (2) for supplying the oxidant, a mixing chamber (8) surrounding the central supply channel (2), into which supply conduits (9, 5) for the fuel and a moderator open, and an outlet duct (11) via which the mixture of fuel and moderator from the mixing chamber (8) is supplied to an outlet opening (3) of the burner (1), wherein the outlet duct (11) is arranged concentrically around the central supply channel (2) for the oxidant, and wherein in the outlet duct (11) in the direction of the outlet opening (3) an angle γ of the outer fuel duct wall to the burner axis and an angle δ of the inner fuel duct wall to a parallel to the burner axis are chosen such that the angle γ is greater than the angle δ.

9. The burner according to claim 8, **characterized in that** the supply conduit (5) for the moderator opens into the mixing chamber (8) via a constricted annular gap (7).

10. The burner according to claim 8 or 9, **characterized in that** the supply conduit (9) for the fuel meets with the moderator jet guided coaxially to the central supply channel (2) for the oxidant at an angle (β) of 10° to 80°, preferably 40° to 60°, with respect to the burner axis (A).

11. The burner according to any of claims 8 to 10, **characterized in that** the outlet duct (11) tapers towards the outlet opening (3) preferably with an angle of 0° to 20° with respect to the burner axis (A).

12. The burner according to any of claims 8 to 11, **characterized in that** the central supply channel (2) for the oxidant is expanded in the region of the outlet opening (3) with an angle (α) of 0° to 45°, preferably 0° to 10°, with respect to the burner axis (A).

13. The burner according to any of claims 8 to 12, **characterized in that** the burner (1) is surrounded by a cooling-water jacket.

## Revendications

1. Procédé de fabrication de gaz de synthèse par oxydation partielle d'un carburant carboné, de nature liquide ou gazeux, en présence d'un agent oxydant contenant de l'oxygène, ledit carburant, ledit agent oxydant et un agent modérateur étant séparément introduits dans un brûleur, et le carburant et ledit agent modérateur étant mélangés dans une chambre de mélange dudit brûleur avant qu'ils ne soient mis en contact avec l'agent oxydant, **caractérisé en ce que** ledit agent oxydant est introduit dans une chambre de combustion à travers la partie centrale d'une sortie dudit brûleur, que le mélange de carburant et d'agent modérateur est introduit dans ladite chambre de combustion à travers ladite sortie de manière à concentriquement entourer l'agent oxydant, que l'on choisit, au sein du canal de sortie menant vers la sortie, un angle γ que la paroi extérieure du canal de carburant forme avec l'axe du brûleur et un angle δ que la paroi intérieure du canal de carburant forme avec une parallèle à l'axe du brûleur de manière à ce que l'angle γ soit plus grand que l'angle δ.

2. Procédé selon la revendication 1, **caractérisé en ce que** l'agent modérateur est injecté dans la chambre de mélange à une vitesse comprise entre 30 m/s et 200 m/s, de préférence entre 80 m/s et 140 m/s.

3. Procédé selon les revendications 1 ou 2, **caractérisé en ce que** l'on utilise, en tant qu'agent modérateur, de la vapeur, du dioxyde de carbone ou un de leurs mélanges, éventuellement en y ajoutant un gaz combustible.

4. Procédé selon l'une des revendications précédentes, **caractérisé en ce que** le carburant est dirigé sur le jet d'agent modérateur en formant avec l'axe du brûleur un angle (β) compris entre 10° et 80°, de préférence entre 40° et 60°.

5. Procédé selon l'une des revendications précédentes, **caractérisé en ce que** le mélange de carburant et d'agent modérateur quitte la chambre de mélange avec une vitesse de sortie comprise entre 30 m/s et 100 m/s.

6. Procédé selon l'une des revendications précédentes, **caractérisé en ce que** le carburant est introduit dans la chambre de combustion à travers une pluralité de brûleurs.

7. Procédé selon la revendication 6, **caractérisé en ce que** chacun desdits brûleurs est alimenté en un carburant différent.

8. Brûleur (1) qui est destiné à la fabrication de gaz de synthèse par oxydation partielle d'un carburant carboné, de nature liquide ou gazeux, en présence d'un agent oxydant contenant de l'oxygène, notamment en mettant en oeuvre un procédé selon l'une des revendications précédentes, et qui est pourvu d'un canal d'alimentation (2) central permettant d'introduire l'agent oxydant, d'une chambre de mélange (8) laquelle entoure le canal d'alimentation (2) central et dans laquelle débouchent les conduites d'alimentation (9, 5) destinées au carburant et à l'agent modérateur, et d'un canal de sortie (11) à travers lequel le mélange de carburant et de modérateur est introduit dans une sortie (3) du brûleur (1) après avoir quitté la chambre de mélange (8), le canal de sortie (11) étant disposé de manière concentrique autour du canal d'alimentation (2) central destiné à l'agent oxydant et, au sein du canal de sortie (11) menant vers la sortie (3), un angle γ que la paroi extérieure du canal de carburant forme avec l'axe du brûleur et un angle δ que la paroi intérieure du canal de carburant forme avec une parallèle à l'axe du brûleur, étant choisis de manière à ce que l'angle γ soit plus grand que l'angle δ.

9. Brûleur selon la revendication 8, **caractérisé en ce que** la conduite d'alimentation (5) destiné à l'agent modérateur débouche dans la chambre de mélange (8) à travers un fente annulaire (7) rétrécie.

10. Brûleur selon les revendications 8 ou 9, **caractérisé en ce que** la conduite d'alimentation (9) destiné au carburant rejoint le jet d'agent modérateur, lequel se propage coaxialement au canal d'alimentation (2) central destiné à l'agent oxydant, selon un angle d'incidence (β) compris entre 10° et 80 °, de préférence entre 40° et 60°, par rapport à l'axe du brûleur (A).

11. Brûleur selon l'une des revendications 8 à 10, **caractérisé en ce que** le canal de sortie (11) s'amenuise vers la sortie (3), de préférence selon un angle compris entre 0° et 20° par rapport à l'axe du brûleur (A).

12. Brûleur selon l'une des revendications 8 à 11, **caractérisé en ce que** le canal d'alimentation (2) central destiné à l'agent oxydant s'élargit au niveau de la sortie (3) selon un angle (α) compris entre 0° et 45°, de préférence entre 0° et 10°, par rapport à l'axe du brûleur (A).

13. Brûleur selon l'une des revendications 8 à 12, **caractérisé en ce que** le brûleur (1) est entouré d'une enveloppe contenant de l'eau de refroidissement.
